# EUROPÄISCHE PATENTSCHRIFT

(11) **EP 0 844 264 B1**
(45) Veröffentlichungstag und Bekanntmachung des Hinweises auf die Patenterteilung: **08.01.2003**
(21) Anmeldenummer: 97810832.2
(22) Anmeldetag: 06.11.1997
(51) Int. Cl.: C08G 61/08, B01J 31/24

(54) **Katalysatorgemisch für ringöffnende Metathesepolymerisation**
Catalytic mixture for ring-opening metathesis polymerization
Mélange catalytique pour la polymérisation par métathèse par ouverture de cycle

(30) Priorität: 15.11.1996 CH 282696
(43) Veröffentlichungstag der Anmeldung: 27.05.1998
(73) Patentinhaber: Ciba Specialty Chemicals Holding Inc., 4057 Basel (CH)
(72) Erfinder: Setiabudi, Frans, 79427 Eschbach (DE); Behm, Dean Tallak, Newark, DE 19711 (US)

(56) Entgegenhaltungen:
- WO-A-96/16100
- WO-A-96/20235
- US-A- 5 198 511
- DEMONCEAU, A. ET AL.: "Ruthenium-catalysed ring-opening..." JOURNAL OF MOLECULAR CATALYSIS, Bd. 76, 1992, Seiten 123-132, XP002101165

## Beschreibung

Die vorliegende Erfindung betrifft eine Katalysator-Zusammensetzung aus einem Ruthenium- oder Osmiumphosphinkomplex und einem hydroxylgruppenhaltigen Alkin; eine Mischung enthaltend ein Diels-Alder-Addukt von Cyclopentadien und eine solche Katalysator-Zusammensetzung; ein Verfahren zur Herstellung eines Metathesepolymerisats sowie die Verwendung der polymerisierbaren Zusammensetzung als Giessharz, lmprägnierharz oder als Umhüllungsmaterial für elektrische oder elektronische Bauteile.

In der WO 93/13171 werden luft- und wasserstabile Einkomponenten- und Zweikomponenten-Katalysatoren auf Basis von Carbonylgruppen enthaltenden Molybdän- und Wolframverbindungen sowie Ruthenium- und Osmiumverbindungen mit mindestens einem Polyenliganden für die thermische und photoaktivierte ringöffnende Metathesepolymerisation (ROMP) von gespannten Cycloolefinen, besonders Norbornen und Norbornenderivaten, beschrieben.
Als Co-Katalysatoren für die Zweikomponenten-Katalysatoren werden u.a. 1-Alkine empfohlen.

Demonceau et al. [A. Demonceau, A.F. Noels, E. Saive und A.J., Hubert: J. Mol. Catal. 76, 123-132 (1992)] beschreiben [(C₆H₅)₃]₃PRuCl₂,[(C₆H₅)₃]₃PRuHCl und
(p-Cymol)RuCl₂P(C₆H₁₁)₃ als thermische Katalysatoren für die ringöffnende Metathesepolymerisation von Norbornen. Die relativ geringe Aktivität dieser Katalysatoren wird durch den Zusatz von Diazoestern gesteigert. Es wird auch erwähnt, dass lediglich (p-Cymol)RuCl₂P(C₆H₁₁)₃ Norbornen in relativ kurzer Zeit bei 60 °C zu polymerisieren vermag. Als weiteres Monomer wird Cycloocten genannt. Andere für die Metathesepolymerisation geeignete Cycloolefine werden nicht erwähnt.

In der WO 96/20235 werden Ruthenium- und Osmiumkomplexverbindungen als ausgezeichnete Katalysatoren für die Metathesepolymerisation von Di- und Oligocyclopentadienen beschrieben.

Überraschenderweise wurde nun gefunden, dass durch den Zusatz von hydroxylgruppenhaltigen 1-Alkinen die katalytische Aktivität der Ruthenium- und Osmiumphosphine ganz erheblich gesteigert und die Eigenschaften der Polymerisate erheblich verbessert werden. Ausserdem führt die Verwendung von hydroxylgruppenhaltigen 1-Alkinen als Co-Katalysatoren zu einer sehr gleichmässigen Freisetzung der Reaktionsenthalpie, d.h. es treten keine hohen Spitzentemperaturen während der Polymerisation auf. So lässt sich beispielsweise bei der Polymerisation von Dicyclopentadien die Spitzentemperatur von üblicherweise ca. 180 °C auf <100 °C senken. Auf diese Weise lassen sich innerhalb kürzerer Polymerisationszeiten Polymerisate mit ausgezeichneten physikalischen und mechanischen Eigenschaften herstellen.

Das Katalysatorsystem ist zudem latent und lagerstabil sowie unempfindlich gegen Luft und Feuchtigkeit, was es erlaubt, auch formulierte polymerisierbare Zusammensetzungen in den Handel zu bringen.

Gegenstand der vorliegenden Erfindung ist eine Zusammensetzung enthaltend
(a) eine Verbindung der Formel I

   (R₁R₂R₃P)ₓL_{y}Me²⁺Z₁⁻Z₂⁻ (I),

   worin R₁, R₂ und R₃ unabhängig voneinander H, C₁-C₂₀-Alkyl, C₁-C₂₀Alkoxy, unsubstituiertes oder mit C₁-C₆-Alkyl, C₁-C₆-Halogenalkyl oder C₁-C₆-Alkoxy substituiertes C₄-C₁₂-Cycloalkyl oder Cycloalkoxy, oder unsubstituiertes oder mit C₁-C₆-Alkyl, C₁-C₆-Halogenalkyl oder C₁-C₆-Alkoxy substituiertes C₆-C₁₆-Aryl oder C₆-C₁₆-Aryloxy, oder unsubstituiertes oder mit C₁-C₆-Alkyl, C₁-C₆-Halogenalkyl oder C₁-C₆-Alkoxy substituiertes C₇-C₁₆-Aralkyl oder C₇-C₁₆-Aralkyloxy darstellen;
   die Reste R₂ und R₃ gemeinsam unsubstituiertes oder mit C₁-C₆-Alkyl, C₁-C₆-Halogenalkyl oder C₁-C₆-Alkoxy substituiertes Tetra- oder Pentamethylen, oder Tetra- oder Pentamethylendioxyl bedeuten, oder unsubstituiertes oder mit C₁-C₆-Alkyl, C₁-C₆-Halogenalkyl oder C₁-C₆-Alkoxy substituiertes und mit ein oder zwei 1,2-Phenylenresten kondensiertes Tetra- oder Pentamethylen, oder Tetra- oder Pentamethylendioxyl darstellen, oder unsubstituiertes oder mit C₁-C₆-Alkyl, C₁-C₆-Halogenalkyl oder C₁-C₆-Alkoxy substituiertes und in den 1,2- und 3,4-Stellungen mit 1,2-Phenylen kondensiertes Tetramethylendioxyl darstellen, und R₁ die zuvor angebene Bedeutung hat;
   L einen Neutralliganden bedeutet, Me für Ru oder Os steht, Z₁⁻ und Z₂⁻ je ein einfach geladenes Anion oder Z₁⁻ und Z₂⁻ zusammen ein zweifach geladenes Anion darstellen,
   x eine Zahl von 1 bis 3 und y eine Zahl von 0 bis 3 darstellen, wobei gilt 2 ≤ x+y ≤ 4; und
(b) eine Verbindung der Formel II

   R₄-C≡C-H (II),
worin R₄ einen einwertigen organischen Rest mit bis zu 30 C-Atomen bedeutet, welcher mindestens eine Hydroxylgruppe enthält.

In den Formeln I und II können die Alkylgruppen geradkettig oder verzweigt sein. Dasselbe gilt auch für den bzw. jeden Alkylteil von Alkoxy, Hydroxyalkyl, Halogenalkyl und von weiteren Alkyl enthaltenden Gruppen. Diese Alkylgruppen enthalten bevorzugt 1 bis 12, besonders bevorzugt 1 bis 8 und insbesondere bevorzugt 1 bis 4 C-Atome.

Alkyl umfaßt beispielsweise Methyl, Ethyl, Isopropyl, n-Propyl, n-Butyl, Isobutyl, sek.-Butyl, tert.-Butyl sowie die verschiedenen isomeren Pentyl-, Hexyl-, Heptyl-, Octyl-, Nonyl-, Decyl-, Undecyl-, Dodecyl-, Tridecyl-, Tetradecyl-, Pentadecyl-, Hexadecyl-, Heptadecyl-, Octadecyl-, Nonadecyl- und Eicosylgruppen.

Alkoxy ist beispielsweise Methoxy, Ethoxy, Propyloxy, lsopropyloxy, n-Butyloxy, Isobutyloxy, sek.-Butyloxy und tert.-Butyloxy.

Halogenalkyl umfaßt beispielsweise Fluormethyl, Difluormethyl, Trifluormethyl, Chlormethyl, Dichlormethyl, Trichlormethyl, 2,2,2-Trifluorethyl, 2-Fluorethyl, 2-Chlorethyl, 2,2,2-Trichlorethyl sowie halogenierte, besonders fluorierte oder chlorierte Isopropyl-, n-Propyl-, n-Butyl-, Isobutyl-, sek.-Butyl-und tert.-Butylgruppen sowie die verschiedenen isomeren halogenierten Pentyl-, Hexyl-, Heptyl-, Octyl-, Nonyl-, Decyl-, Undecyl-, Dodecyl-, Tridecyl-, Tetradecyl-, Pentadecyl-, Hexadecyl-, Heptadecyl-, Octadecyl-, Nonadecyl- und Eicosylgruppen.

Bei Cycloalkyl handelt es sich bevorzugt um C₅-C₈-Cycloalkyl, besonders um C₅- oder C₆-Cycloalkyl. Einige Beispiele sind Cyclopropyl, Dimethylcyclopropyl, Cyclobutyl, Cyclopentyl, Methylcyclopentyl, Cyclohexyl, Cycloheptyl und Cyclooctyl.

Cycloalkoxygruppen sind beispielsweise Cyclopentyloxy, Methylcyclopentyloxy und Cyclohexyloxy.

Aryl enthält bevorzugt 6 bis 10 C-Atome. Es kann sich beispielsweise um Phenyl, Pentalinyl, Indenyl, Naphtyl, Azulinyl und Anthryl handeln.

Aryloxygruppen sind beispielsweise Phenyloxy, Naphthyloxy und Anthryloxy.

Aralkyl enthält bevorzugt 7 bis 12 C-Atome und besonders bevorzugt 7 bis 10 C-Atome. Es kann sich zum Beispiel um Benzyl, Phenethyl, 3-Phenylpropyl, α-Methylbenzyl, 4-Phenylbutyl und α,α-Dimethylbenzyl handeln.

Beispiele für Aralkyloxygruppen sind Benzyloxy, Phenethyloxy, 3-Phenylpropyloxy, α-Methylbenzyloxy, 4-Phenylbutyloxy und α,α-Dimethylbenzyloxy.

Hydroxyalkyl umfaßt beispielsweise Hydroxymethyl, Hydroxyethyl, 1-Hydroxyisopropyl, 1-Hydroxy-n-propyl, 2-Hydroxy-n-butyl, 1-Hydroxyisobutyl, 1-Hydroxy-sek.-butyl, 1-Hydroxytert.-butyl sowie die verschiedenen hydroxylsubstituierten isomeren Pentyl-, Hexyl-, Heptyl-, Octyl-, Nonyl-, Decyl-, Undecyl-, Dodecyl-, Tridecyl-, Tetradecyl-, Pentadecyl-, Hexadecyl-, Heptadecyl-, Octadecyl-, Nonadecyl- und Eicosylgruppen.

Bevorzugt als Komponente (a) sind Verbindungen der Formel I, worin Me für Ruthenium steht.

Weiterhin bevorzugt als Komponente (a) sind Verbindungen der Formel I, worin R₁, R₂ und R₃ unabhängig voneinander für C₁-C₆-Alkyl, C₁-C₆-Alkoxy, C₄-C₁₂-Cycloalkyl, C₄-C₁₂-Cycloalkoxy, C₆-C₁₆-Aryl oder C₆-C₁₆-Aryloxy stehen.

Besonders bevorzugt sind Verbindungen der Formel I, worin R₁, R₂ und R₃ unabhängig voneinander für Isopropyl, sek.-Butyl, Phenyl, Tolyl, Cyclopentyl oder Cyclohexyl stehen.

L steht in der Formel I vorzugsweise für unsubstituiertes oder mit 1 bis 3 C₁-C₄-Alkyl substituiertes Benzol, Thiophen, Benzonitril, Acetonitril, Stickstoff (N₂), einen unsubstituierten oder teilweise oder vollständig fluorierten C₁-C₄-Alkohol, CO, H₂O oder NH₃.

Bevorzugt sind weiterhin Verbindungen der Formel I, worin Z₁⁻ und Z₂⁻ unabhängig voneinander für H⁻, F⁻, Cl⁻, Br⁻, I⁻ oder unsubstituiertes oder durch eine oder mehrere Hydroxidgruppen, Aminogruppen, Halogenatome, C₁-C₂₀-Alkyl-, C₁-C₂₀-Alkoxy-, C₄-C₁₂-Cycloalkyl-, C₄-C₁₂-Cycloalkoxy-, C₆-C₁₆-Aryl-, C₆-C₁₆-Aryloxy- oder C₇-C₁₆-Aralkylgruppen substituiertes Cyclopentadienyl stehen.

Die Komplexverbindungen der Formel I sind bekannt und beispielsweise in der WO 96/16100 und der WO 96/20235 beschrieben.

Beispiele für Ruthenium- und Osmiumverbindungen sind der Formel I sind [Tos bedeutet Tosylat, Cp steht für Cyclopentadienyl und C₆H₁₁ ist Cyclohexyl]:
(C₆H₁₁)₂HPRu(p-Cymol)Cl₂, (C₆H₁₁)₃PRu(p-Cymol)Cl₂, (C₆H₁₁)₃PRu(p-Cymol)(Tos)₂,
(C₆H₁₁)₃PRu(p-Cymol)Br₂, (C₆H₁₁)₃PRu(p-Cymol)ClF, (C₆H₁₁)₃PRu(C₆H₆)(Tos)₂,
(C₆H₁₁)₃PRu(CH₃-C₆H₅)(Tos)₂, (C₆H₁₁)₃PRu(C₁₀H₈)(Tos)₂, (i-C₃H₇)₃PRu(p-Cymol)Cl₂,
(CH₃)₃PRu(p-Cymol)Cl₂, (C₆H₁₁)₃PRu(CH₃-CN)(C₂H₅-OH)(Tos)₂,
(C₆H₁₁)₃PRu(p-Cymol)(CH₃-CN)₂(PF₆)₂, (C₆H₁₁)₃PRu(p-Cymol)(CH₃-CN)₂(Tos)₂,
(n-C₄H₉)₃PRu(p-Cymol)(CH₃-CN)₂(Tos)₂, (C₆H₁₁)₃PRu(CH₃CN)Cl₂, (C₆H₁₁)₃PRu(CH₃-CN)₂Cl₂,
(n-C₄H₉)₃PRu(p-Cymol)Cl₂, (C₆H₁₁)₃PRu(p-Cymol)(C₂H₅OH)₂(BF₄)₂,
(C₆H₁₁)₃PRu(p-Cymol)(C₂H₅OH)₂(PF₆)₂, (i-C₃H₇)₃POs(p-Cymol)Cl₂, (CH₃)₃POs(p-Cymol)Cl₂,
(C₆H₅)₃POs(p-Cymol)Cl₂, [(C₆H₁₁)₃P]₃Ru(CH₃-CN), (C₅H₉)₃PRu(p-Cymol)Cl₂,
(C₆H₁₁)₃PRu(p-Cymol)HCl, (C₆H₁₁)₃PRu[1,2,4,5-(CH₃)₄C₆H₂]Cl₂,
(C₆H₁₁)₃PRu[1,3,5-(i-C₃H₇)₃C₆H₃]Cl₂, (C₆H₁₁)₃PRu[(C₄H₉)-C₆H₅]Cl₂, (C₆H₁₁)₃POs(p-Cymol)Cl₂,
(C₆H₅)₃PRu(p-Cymol)HCl, [(C₆H₁₁)₃P]₂Ru(CH₃-CN)(Tos)₂,
RuCl₂(p-Cymol)[(C₆H₁₁)₂PCH₂CH₂P(C₆H₁₁)₂], (C₆H₁₁)₃PRu(p-Cymol)(C₂H₅OH)(BF₄)₂,
(C₆H₁₁)₃PRu(C₆H₆)(C₂H₅OH)₂(Tos)₂, (C₆H₁₁)₃PRu(i-C₃H₇-C₆H₅)(Tos)₂,
(C₆H₁₁)₃PRu(C₆H₆)(p-Cymol)Br₂, (C₆H₁₁)₃PRu(Biphenyl)(Tos)₂,
(C₆H₁₁)₃PRu(Anthracen)(Tos)₂, (2-CH₃C₆H₄)₃POs(p-Cymol)Cl₂ und
(C₆H₁₁)₃PRu(Chrysen)(Tos)₂.

Besonders bevorzugte Verbindungen der Formel I sind [(C₆H₁₁)₃P]₂RuCl₂, [(C₆H₅)₃P]₃ RuCl₂, [(C₆H₅)₃P]₃ (CO)RuH₂, [(C₆H₅)₃P]₃ RuClCp, [(C₆H₁₁)₃P]₂(CH₃OH)Ru(Tos)₂, [(o-Tolyl)₃P]₃RuCl₂, [(CH₃)₂CH]₃P(p-Cymol)RuCl₂ und insbesondere (C₆H₁₁)₃P(p-Cymol)RuCl₂.

Die Verbindungen der Formel II sind ebenfalls bekannt und zum Teil im Handel erhältlich. Beispiele dafür sind 3-Hydroxyphenylethin, 1-Ethinyl-1-cyclopentanol, 1-Ethinyl-1-cyclohexanol, 9-Ethinyl-9-fluorenol, 1-Propinylcyclohexanol, 2-Propin-1-ol, 1,1-Diphenyl-2-propin-1-ol, 3-Butin-1-ol, 3-Butin-2-ol 1-Phenyl-2-propin-1-ol, 2-Phenyl-3-butin-2-ol, 2-Methyl-3-butin-2-ol, 1-Pentin-3-ol, 4-Pentin-1-ol, 4-Pentin-2-ol, 3-Methyl-1-pentin-3-ol, 4-Methyl-1-pentin-3-ol, 1-Hexin-3-ol, 1-Heptin-3-ol, 3-Ethyl-1-heptin-3-ol, 3-Ethyl-5-methyl-1-heptin-3-ol und 10-Undecin-1-ol.

Die erfindungsgemässen Zusammensetzungen enthalten als Komponente (b) vorzugsweise eine Verbindung der Formel II, worin R₄ eine durch mindestens eine Hydroxylgruppe substituierte C₁-C₂₀-Alkyl-, C₁-C₂₀-Alkoxy-, C₄-C₁₂-Cycloalkyl-, C₄-C₁₂-Cycloalkoxy-, C₆-C₁₆-Aryl-, C₆-C₁₆-Aryloxy- oder C₇-C₁₆-Aralkylgruppe darstellt.

Besonders bevorzugt bedeutet R₄ in der Formel II C₁-C₁₂-Hydroxyalkyl.

Insbesondere bevorzugte Verbindungen der Formel II sind 2-Methyl-3-butin-2-ol und 2-Phenyl-3-butin-2-ol.

Die Mengen der Komponenten (a) und (b) können in den erfindungsgemässen Zusammensetzungen in weiten Bereichen variieren.
Vorzugsweise beträgt das Gewichtsverhältnis der Komponenten (a) : (b) 25 : 1 bis 1 : 10, insbesondere 10 : 1 bis 1 : 2 und ganz besonders bevorzugt 7 : 1 bis 2 : 1.
Besonders geeignet sind Zusammensetzungen enthaltend etwa äquimolare Mengen der Kompoonente (a) und (b), d.h. Zusammensetzungen, worin das molare Verhältnis der Komponenten (a): (b) 1,1:1 bis 1:1,1 beträgt.

Wie bereits eingangs erwähnt, eignen sich die erfindungsgemässen Zusammensetzungen als lagerstabile Zweikomponenten-Katalysatoren für die ringöffnende Metathese-Polymerisation von Cyclopentadien-Addukten. Dieses neue Katalysator-System ermöglicht die Polymerisation von Dicyclopentadien und anderen Cyclopentadien-Addukten in wesentlich kürzerer Zeit, wobei eine hohe Reaktionsenthalpie und nur ein geringer Gewichtsverlust zu beobachten ist. Die Polymerisate zeichnen sich durch eine hohe Glassübergangstemperatur und ganz allgemein durch gute mechanische Eigenschaften aus.
Einen weiteren Erfindungsgegenstand bildet daher eine Zusammensetzung enthaltend die oben definierten Komponenten (a) und (b) und zusätzlich
(c) ein Diels-Alder-Addukt von Cyclopentadien.

Bevorzugte Komponenten (c) sind Verbindungen der Formel III 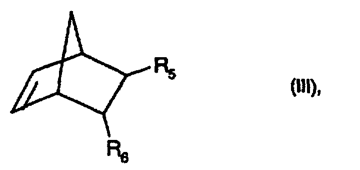 worin R₅ und R₆ unabhängig voneinander Wasserstoff, C₁-C₁₂-Alkyl, Phenyl, Tolyl, Cyclohexyl, Cyclohexenyl, Halogen, Cyano, C₁-C₁₂-Hydroxyalkyl oder C₁-C₁₂-Halogenalkyl bedeuten oder R₅ und R₆ zusammen mit den C-Atomen, an die sie gebunden sind, einen fünf- oder sechsgliedrigen Ring bilden.

Geeignete Diels-Alder-Addukte sind beispielsweise die folgenden Verbindungen:

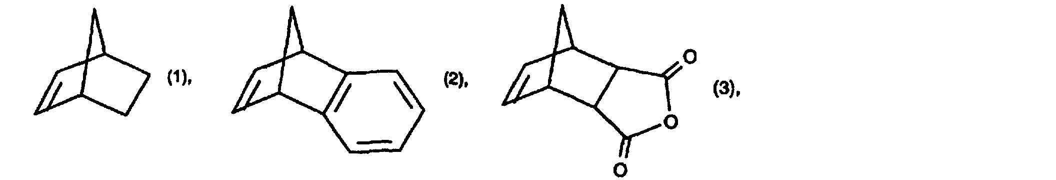

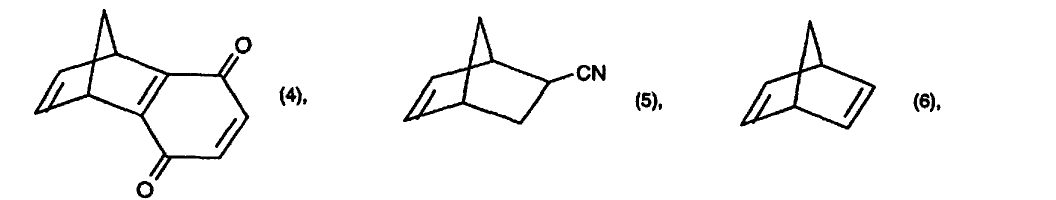

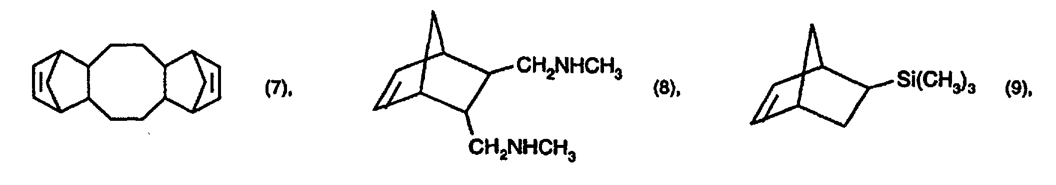

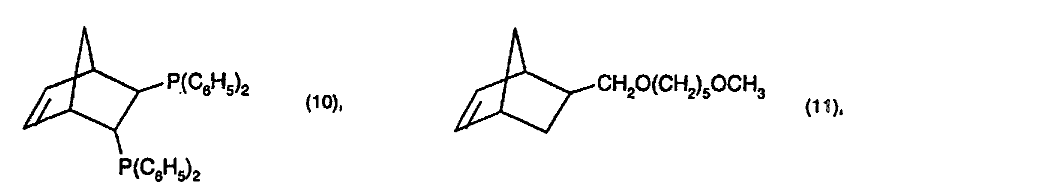

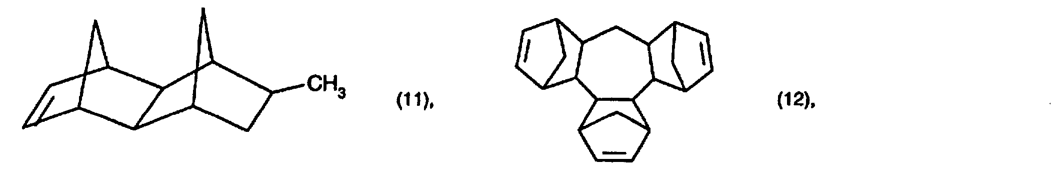

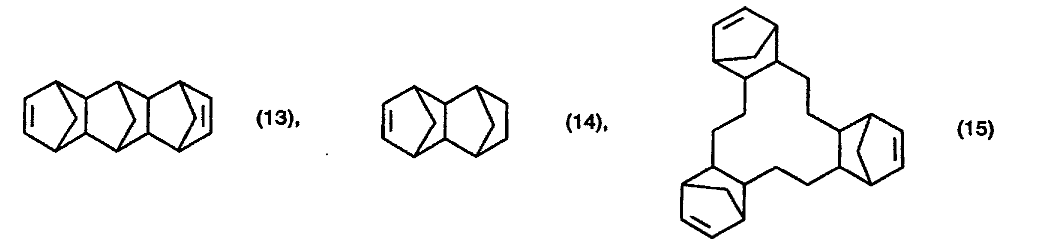

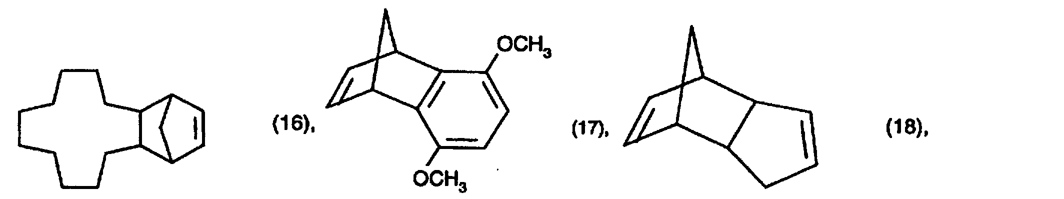

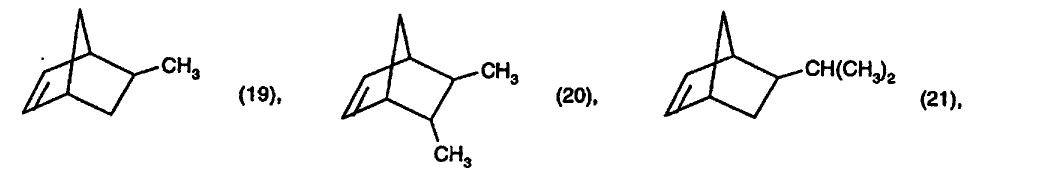

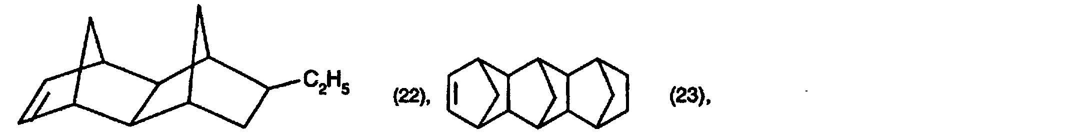

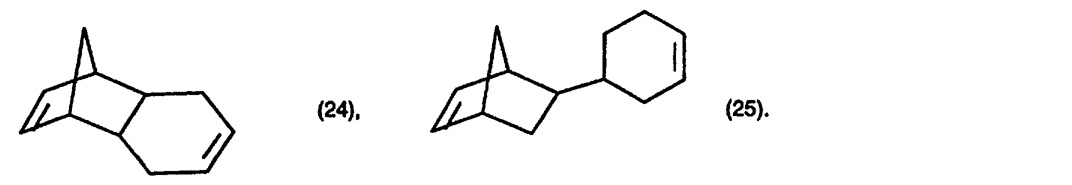

Bevorzugte Diels-Alder-Addukte sind Norbornen (1), Norbornadien (6), Cyclohexenylnorbornen (25), Tetracyclododecen (14), Methyltetracyclododecen (11) und insbesondere Dicyclopentadien (18).

Die Mengen der Komponenten (a), (b) und (c) können in den erfindungsgemässen Zusammensetzungen in weiten Bereichen variieren.
Bevorzugt sind Zusammensetzungen enthaltend, bezogen auf die Gesamtzusammensetzung (a) + (b) + (c), 0,001-10,0 Gew.-%, besonders bevorzugt 0,01-5,0 Gew.-%, inbesondere bevorzugt 0,1-2,0 Gew.-%, der Komponente (a), 0,001-10,0 Gew.-%, besonders bevorzugt 0,005-2,0 Gew.-%, inbesondere bevorzugt 0,01-1,0 Gew.-%, der Komponente (b) und 85,0-99,99 Gew.-%, besonders bevorzugt 90,0-99,9 Gew.-%, inbesondere bevorzugt 95,0-99,8 Gew.-%, der Komponente (c).

Das Gewichtsverhältnis von Monomer (Komponente c) zu Katalysatorgemisch (Komponenten a + b) kann ebenfalls in weiten Bereichem variieren.
Vorzugsweise enthalten die erfindungsgemässen Zusammensetzungen, bezogen auf die Gesamtzusammensetzung, 85,0-99,99 Gew.-%, insbesondere 90,0-99,9 Gew.-%, Monomer und 0,01-15,0 Gew.-%, insbesondere 0,1-10,0 Gew.-%, Katalysatorgemisch.

Die gewünschte Viskosität des härtbaren Gemisches kann durch Zusatz von thermoplastischen Materialien eingestellt werden. Beispiele für geeignete Thermoplasten sind Polystyrol, Polynorbomen (z.B. Norsorex® NS der Fa. Nippon Zeon), hydrierte Polynorbornenderivate (z.B. Zeonex® der Fa. Nippon Zeon), Polycycloocten (z.B. Vestenamer® der Fa. Hüls) und Polybutadien.

Weiterhin können die härtbaren Mischungen Zähigkeitsvermittler ("Toughener") enthalten, wie zum Beispiel Core/Shell-Polymere oder die dem Fachmann als "Rubber Toughener" bekannten Elastomere oder Elastomere enthaltende Pfropfpolymere.
Geeignete Zähigkeitsvermittler sind beispielsweise in der EP-A-449 776 beschrieben.

Zur Verbesserung der elektrischen Eigenschaften (Dielektrizitätskonstante, Verlustfaktor) können den härtbaren Mischungen Silane, wie z.B. die von der Fa. Osi Specialties unter der Bezeichnung Silquest® Silan angebotenen Verbindungen, zugesetzt werden. Geeignete Silane sind beispielsweise Octyltriethoxysilan, Methyltriethoxysilan, Vinyltriethoxysilan, Methyltrimethoxysilan, Vinyltrimethoxysilan, γ-Aminopropyltrimethoxysilan und γ-Glycidyloxypropyltrimethoxysilan.

Neben den oben erwähnten Additiven können die erfindungsgemässen Zusammensetzungen weitere übliche Zusatzstoffe enthalten, wie z.B. Antioxidantien, Lichtschutzmittel, Weichmacher, Farbstoffe, Füllstoffe, Pigmente, Thixotropiemittel, Entschäumer, Antistatika, Gleitmittel und Entformungshilfsmittel.

Weiterhin können die erfindungsgemässen Zusammensetzungen inerte Lösungsmittel enthalten.
Geeignete inerte Lösungsmittel sind zum Beispiel protisch-polare und aprotische Lösungsmittel, die allein oder in Mischungen aus mindestens zwei Lösungsmitteln verwendet werden können. Beispiele sind: Ether (Dibutylether, Tetrahydrofuran, Dioxan, Ethylenglykolmonomethyl- oder -dimethylether, Ethylenglykolmonoethyl- oder -diethylether, Diethylenglykoldiethylether, Triethylenglykoldimethylether), halogenierte Kohlenwasserstoffe (Methylenchlorid, Chloroform, 1,2-Dichlorethan, 1,1,1-Trichlorethan, 1,1,2,2-Tetrachlorethan), Carbonsäureester und Lactone (Essigsäureethylester, Propionsäuremethylester, Benzoesäureethylester, 2-Methoxyethylacetat, γ-Butyrolacton, δ-Valerolacton, Pivalolacton), Carbonsäureamide und Lactame (N,N-Dimethylformamid, N,N-Diethylformamid, N,N-Dimethylacetamid, Tetramethylharnstoff, Hexamethylphosphorsäuretriamid, γ-Butyrolactam, ε-Caprolactam, N-Methylpyrrolidon, N-Acetylpyrrolidon, N-Methylcaprolactam), Sulfoxide (Dimethylsulfoxid), Sulfone (Dimethylsulfon, Diethylsulfon, Trimethylensulfon, Tetramethylensulfon), tertiäre Amine (N-Methylpiperidin, N-Methylmorpholin), aliphatische und aromatische Kohlenwasserstoffe, wie zum Beispiel Petrolether, Pentan, Hexan, Cyclohexan, Methylcyclohexan, Benzol oder substituierte Benzole (Chlorbenzol, o-Dichlorbenzol, 1,2,4-Trichlorbenzol, Nitrobenzol, Toluol, Xylol) und Nitrile (Acetonitril, Propionitril, Benzonitril, Phenylacetonitril). Bevorzugte Lösungsmittel sind aprotische polare und unpolare Lösungsmittel.

Bevorzugte Lösungsmittel sind aliphatische und aromatische Kohlenwasserstoffe sowie Gemische solcher Lösungsmittel.

Ein besonderer Vorteil der erfindungsgemässen Zusammensetzungen besteht darin, daß bei flüssigen Monomeren eine Metathesepolymerisation ohne die Verwendung eines Lösungsmittels durchgeführt werden kann.

Die erfindungsgemässe Zusammensetzung kann direkt vor der Polymerisation hergestellt oder als vorformuliertes Gemisch verwendet werden. Das Gemisch kann vor der Polymerisation als gebrauchsfertige Formulierung längere Zeit gelagert werden, was für die grosstechnische Anwendung von Vorteil ist. Es empfiehlt sich jedoch eine Lagerung unter Lichtausschluss, wenn der Katalysator photolabile Liganden enthält.

Beide Komponenten (a) und (b) sind bei Raumtemperatur nicht reaktiv gegenüber gespannten Cycloolefinen, d.h. Mischungen enthaltend ein Diels-Alder-Addukt von Cyclopentadien und Komponente (a) bzw. ein Diels-Alder-Addukt von Cyclopentadien und Komponente (b) sind bei Raumtemperatur über mehrere Monate lagerstabil. Erst beim Mischen der beiden Komponenten entsteht ein Produkt, das als Katalysator für die ringöffnende Metathesepolymerisation wirkt. Das erfindungsgemässe Zwei-Komponenten-System eignet sich daher besonders für das RlM-Verfahren, da das polymerisierbare Cycloolefin vor der Verarbeitung in zwei Portionen geteilt werden kann, die mit den entsprechenden Mengen der Komponenten (a) und (b) versetzt werden. Beim Vermischen der beiden Portionen und Einspritzen in die vorgewärmte Form polymersisiert das Gemisch dann sehr rasch und bildet gehärtete Produkte mit guten mechanischen Eigenschaften.

Gegenstand der vorliegenden Erfindung ist daher auch ein härtbares 2-Komponenten-System bestehend aus mindestens zwei Komponenten (d) und (e), wobei
(d) eine Mischung aus 90,0-99,999 Gew.-%, vorzugsweise 95,0- 99,995 Gew.-%, insbesondere 98,0,0- 99,99 Gew.-%, eines Diels-Alder-Addukts von Cyclopentadien und 0,001-10,0 Gew.-%, vorzugsweise 0,005- 5,0 Gew.-%, insbesondere 0,01- 2,0 Gew.-%, der oben angegebenen Komponente (a) ist, und
(e) eine Mischung aus 90,0-99,999 Gew.-%, vorzugsweise 95,0- 99,995 Gew.-%, insbesondere 98,0- 99,99 Gew.-%, eines Diels-Alder-Addukts von Cyclopentadien und 0,001-10,0 Gew.-%, vorzugsweise 0,005- 5,0 Gew.-%, insbesondere 0,01- 2,0 Gew.-%, der oben angegebenen Komponente (b) ist.

Einen weiteren Erfindungsgegenstand bildet ein Verfahren zur Herstellung eines Metathesepolymerisats, dadurch gekennzeichnet, dass eine Zusammensetzung enthaltend die Komponenten (a) bis (c) auf eine Temperatur >40 °C erwärmt wird.

Zweckmässig wird das erfindungsgemässe Verfahren bei einer Temperatur von mindestens 60°C durchgeführt. Insbesondere wird das erfindungsgemäße Verfahren bei Temperaturen von 60 bis 300 °C, bevorzugt 60 bis 250 °C, besonders bevorzugt 60 bis bis 200 °C und insbesondere bevorzugt 70 bis 160 °C, durchgeführt. Nach der Polymerisation kann es vorteilhaft sein, das Gemisch bei erhöhten Temperaturen, zum Beispiel 80 bis 200 °C, nachzutempern.

Falls als Komponente (a) eine Verbindung der Formel I mit photolabilen Liganden eingesetzt wird, kann die Metathesepolymerisation auch photochemisch durchgeführt werden. In diesem Fall wird eine Zusammensetzung enthaltend die Komponenten (a) bis (c) mit UV-Strahlung oder sichtbarem Licht bestrahlt und gegebenenfalls thermisch nachgehärtet.

Die Polymerisation kann mit formgebenden Verfahren verbunden sein, zum Beispiel Kalandrier-, Giess-, Press-, Spritzguss- oder Extrusionsverfahren. Mit dem erfindungsgemässen Verfahren können Werkstoffe zur Herstellung von Formkörpern aller Art und Beschichtungen hergestellt werden. Vorteilhaft werden Formgebung und Polymerisation in lösungsmittelfreien Reaktivsystemen verbunden, wobei Verarbeitungsverfahren, wie zum Beispiel Spritzgiessen, Extrusion, Polymerisationen in vorgegebenen Formen (gegebenenfalls unter Druck) angewendet werden können.

Die nach dem erfindungsgemässen Verfahren hergestellten Gemische können Homopolymere, Copolymere mit statistischer Verteilung der Struktureinheiten, Pfropfpolymere, Blockpolymere oder vernetzte Polymere enthalten. Die Polymere können ein mittleres Molekulargewicht von 500 bis zu 2'000'000 Dalton, vorzugsweise 1000 bis 1'000'000 Dalton (bestimmt mittels Gelpermeationschromatographie) aufweisen.

Die nach dem erfindungsgemässen Verfahren hergestellten Gemische zeichnen sich vor allem durch eine hohe Wärmestabilität, hohe Zähigkeit und mechanische Festigkeit sowie durch hervorragende elektrische Eigenschaften (niedrige Dielektrizitätskonstante, niedriger Verlustfaktor bzw. tanδ-Wert) aus und eignen sich besonders für Anwendungen in der Vakuum-Giesstechnologie, als Giessharze, lmprägnierharze und insbesondere als Umhüllungsmaterial für elektrische und elektronische Bauteile.
Die gehärteten Vergussmassen weisen gute mechanische und dielektrische Eigenschaften und eine hohe Lebensdauer aus.
Gegenstand der vorliegenden Erfindung ist somit auch die Verwendung der erfindungsgemässen Zusammensetzung als Giessharz, lmprägnierharz und als Umhüllungsmaterial für elektrische oder elektronische Bauteile.

### Beispiele:

In den Arbeitsbeispielen werden die folgenden Abkürzungen verwendet:
DSC: Differential Scanning Calorimetry
TGA: Thermogravimetrische Analyse
RT: Raumtemperatur
T_{g}: Glassübergangstemperatur
ΔH: Reaktionsenthalpie
In allen Beispielen wird kommerziell erhältliches Dicyclopentadien (BF Goodrich, USA) mit einer Reinheit von 98,4 % (bestimmt mittels Gaschromatographie) eingesetzt. Als ROMP-Katalysator wird (C₆H₁₁)₃P(p-Cymol)RuCl₂ (Katalysator A) verwendet.

### Beispiel 1:

0,2 g Katalysator A wird in 100 g flüssigem Dicyclopentadien (erwärmt auf 40 °C) gelöst. Anschliessend wird 0,043 g 2-Methyl-3-butin-2-ol hinzugefügt und durch Umrühren gelöst. Die Mischung wird dann polymerisiert (Härtungszyklus: 1 h/80 °C, 1 h/100 °C, 2 h/120 °C), wobei nach 80 min die während der ersten Härtungsphase auftretende Spitzentemperatur von Tₘₐₓ = 83 °C gemessen wird. Die mittels DSC bestimmte Glassübergangstemperatur des gehärteten Produkts ist T_{g} = 123 °C; der mittels TGA gemessene Umsatz beträgt 94 %.

### Beispiel 2:

Analog zu Beispiel 1 wird eine Mischung aus 100 g flüssigem Dicyclopentadien, 0,2 g Katalysator A und 0,075 g 2-Phenyl-3-butin-2-ol polymerisiert. Die während der ersten Härtungsphase nach 97 min auftretende Spitzentemperatur beträgt Tₘₐₓ = 142 °C.

## Patentansprüche

1. Zusammensetzung enthaltend
(a) eine Verbindung der Formel I
(R₁R₂R₃P)ₓL_{y}Me²⁺Z₁⁻Z₂⁻ (I),
worin R₁, R₂ und R₃ unabhängig voneinander H, C₁-C₂₀-Alkyl, C₁-C₂₀-Alkoxy, unsubstituiertes oder mit C₁-C₆-Alkyl, C₁-C₆-Halogenalkyl oder C₁-C₆-Alkoxy substituiertes C₄-C₁₂-Cycloalkyl oder Cycloalkoxy, oder unsubstituiertes oder mit C₁-C₆-Alkyl, C₁-C₆-Halogenalkyl oder C₁-C₆-Alkoxy substituiertes C₆-C₁₆-Aryl oder C₆-C₁₆-Aryloxy, oder unsubstituiertes oder mit C₁-C₆-Alkyl, C₁-C₆-Halogenalkyl oder C₁-C₆-Alkoxy substituiertes C₇-C₁₆-Aralkyl oder C₇-C₁₆-Aralkyloxy darstellen;
die Reste R₂ und R₃ gemeinsam unsubstituiertes oder mit C₁-C₆-Alkyl, C₁-C₆-Halogenalkyl oder C₁-C₆-Alkoxy substituiertes Tetra- oder Pentamethylen, oder Tetra- oder Pentamethylendioxyl bedeuten, oder unsubstituiertes oder mit C₁-C₆-Alkyl, C₁-C₆-Halogenalkyl oder C₁-C₆-Alkoxy substituiertes und mit ein oder zwei 1,2-Phenylenresten kondensiertes Tetra- oder Pentamethylen, oder Tetra- oder Pentamethylendioxyl darstellen, oder unsubstituiertes oder mit C₁-C₆-Alkyl, C₁-C₆-Halogenalkyl oder C₁-C₆-Alkoxy substituiertes und in den 1,2- und 3,4-Stellungen mit 1,2-Phenylen kondensiertes Tetramethylendioxyl darstellen, und R₁ die zuvor angebene Bedeutung hat;
L einen Neutralliganden bedeutet, Me für Ru oder Os steht, Z₁⁻ und Z₂⁻ je ein einfach geladenes Anion oder Z₁⁻ und Z₂⁻ zusammen ein zweifach geladenes Anion darstellen, x eine Zahl von 1 bis 3 und y eine Zahl von 0 bis 3 darstellen, wobei gilt 2 ≤ x+y ≤ 4; und
(b) eine Verbindung der Formel II
R₄-C≡C-H (II),
worin R₄ einen einwertigen organischen Rest mit bis zu 30 C-Atomen bedeutet, welcher mindestens eine Hydroxylgruppe enthält.
(c) ein Dicyclopentadien

2. Zusammensetzung nach Anspruch 1, enthaltend als Komponente (a) eine Verbindung der Formel I, worin Me für Ruthenium steht.

3. Zusammensetzung nach Anspruch 1, enthaltend als Komponente (a) eine Verbindung der Formel I, worin R₁, R₂ und R₃ unabhängig voneinander für C₁-C₆-Alkyl, C₁-C₆-Alkoxy, C₄-C₁₂-Cycloalkyl, C₄-C₁₂-Cycloalkoxy, C₆-C₁₆-Aryl oder C₆-C₁₆-Aryloxy stehen.

4. Zusammensetzung nach Anspruch 1, enthaltend als Komponente (a) eine Verbindung der Formel I, worin R₁, R₂ und R₃ unabhängig voneinander für Isopropyl, sek.-Butyl, Phenyl, Tolyl, Cyclopentyl oder Cyclohexyl stehen.

5. Zusammensetzung nach Anspruch 1, enthaltend als Komponente (a) eine Verbindung der Formel I, worin L für unsubstituiertes oder mit 1 bis 3 C₁-C₄-Alkyl substituiertes Benzol, Thiophen, Benzonitril, Acetonitril, Stickstoff (N₂), einen unsubstituierten oder teilweise oder vollständig fluorierten C₁-C₄-Alkohol, CO, H₂O oder NH₃ steht.

6. Zusammensetzung nach Anspruch 1, enthaltend als Komponente (a) eine Verbindung der Formel I, worin Z₁⁻ und Z₂⁻ unabhängig voneinander für H⁻, F⁻, Cl⁻, Br⁻, I⁻ oder unsubstituiertes oder durch eine oder mehrere Hydroxidgruppen, Aminogruppen, Halogenatome, C₁-C₂₀-Alkyl-, C₁-C₂₀-Alkoxy-, C₄-C₁₂-Cycloalkyl-, C₄-C₁₂-Cycloalkoxy-, C₆-C₁₆-Aryl-, C₆-C₁₆-Aryloxy- oder C₇-C₁₆-Aralkylgruppen substituiertes Cyclopentadienyl stehen.

7. Zusammensetzung nach Anspruch 1, enthaltend als Komponente (b) eine Verbindung der Formel II, worin R₄ eine durch mindestens eine Hydroxylgruppe substituierte C₁-C₂₀-Alkyl-, C₁-C₂₀-Alkoxy-, C₄-C₁₂-Cycloalkyl-, C₄-C₁₂-Cycloalkoxy-, C₆-C₁₆-Aryl-, C₆-C₁₆-Aryloxy- oder C₇-C₁₆-Aralkylgruppe darstellt.

8. Zusammensetzung nach Anspruch 1, enthaltend als Komponente (b) eine Verbindung der Formel II, worin R₄ für C₁-C₁₂-Hydroxyalkyl steht.

9. Zusammensetzung nach Anspruch 1, enthaltend als Komponente (b) 2-Methyl-3-butin-2-ol oder 2-Phenyl-3-butin-2-ol.

10. Zusammensetzung nach Anspruch 1, worin das Molverhältnis der Komponenten (a) : (b) 25 : 1 bis 1 : 10 beträgt.

11. Zusammensetzung nach Anspruch 1, enthaltend, bezogen auf die Gesamtzusammensetzung, 0,001-10,0 Gew.-% der Komponente (a), 0,001-10,0 Gew.-% der Komponente (b) und 85,0-99,99 Gew.-% der Komponente (c).

12. Verfahren zur Herstellung eines Metathesepolymerisats, **dadurch gekennzeichnet, dass** eine Zusammensetzung nach Anspruch 1 auf eine Temperatur >40 °C erwärmt wird.

13. Verwendung eines Metathesepolymerisats nach Anspruch 12 als Giessharz, Imprägnierharz oder als Umhüllungsmaterial für elektrische oder elektronische Bauteile.

## Claims

1. A composition, comprising
(a) a compound of formula I
(R₁R₂R₃P)ₓ L_{y} Me²⁺Z₁⁻Z₂⁻ (I),
wherein R₁, R₂ and R₃ are each independently of one another H, C₁-C₂₀alkyl, C₁-C₂₀-alkoxy; C₄-C₁₂cycloalkyl or cycloalkoxy which is unsubstituted or substituted by C₁-C₆-alkyl, C₁-C₆haloalkyl or C₁-C₆alkoxy, or C₆-C₁₆aryl or C₆-C₁₆aryloxy which is unsubstituted or substituted by C₁-C₆alkyl, C₁-C₆haloalkyl or C₁-C₆alkoxy, or C₇-C₁₆aralkyl or C₇-C₁₆aralkyloxy which is unsubstituted or substituted by C₁-C₆alkyl, C₁-C₆haloalkyl or C₁-C₆alkoxy;
R₂ and R₃ together are tetra- or pentamethylene or tetra- or pentamethylenedioxyl which is unsubstituted or substituted by C₁-C₆alkyl, C₁-C₆haloalkyl or C₁-C₆alkoxy, or tetra- or pentamethylene or tetra- or pentamethylenedioxyl which is unsubstituted or substituted by C₁-C₆alkyl, C₁-C₆haloalkyl or C₁-C₆alkoxy and which is condensed with one or two 1,2-phenylene radicals, or tetramethylenedioxyl which is unsubstituted or substituted by C₁-C₆alkyl, C₁-C₆haloalkyl or C₁-C₆alkoxy and which is condensed in 1,2- and 3,4-position with 1,2-phenylene, and R₁ has the meaning cited above;
L is a neutral ligand, Me is Ru or Os, Z₁⁻ and Z₂⁻ are each a singly charged anion, or Z₁⁻ and Z₂⁻ together are a doubly charged anion, x is a number from 1 to 3, and y is a number from 0 to 3, wherein 2 ≤ x+y ≤ 4; and
(b) is a compound of formula II
R₄-C≡C-H (II),
wherein R₄ is a monovalent organic radical of up to 30 carbon atoms which contains at least one hydroxyl group.
(c) a dicyclopentadiene.

2. A composition according to claim 1, wherein component (a) is a compound of formula I, wherein Me is ruthenium.

3. A composition according to claim 1, wherein component (a) is a compound of formula I, wherein R₁, R₂ and R₃ are each independently of one another C₁-C₆alkyl, C₁-C₆alkoxy, C₄-C₁₂cycloalkyl, C₄-C₁₂cycloalkoxy, C₆-C₁₆aryl or C₆-C₁₆aryloxy.

4. A composition according to claim 1, wherein component (a) is a compound of formula I, wherein R₁, R₂ and R₃ are each independently of one another isopropyl, sec-butyl, phenyl, tolyl, cyclopentyl or cyclohexyl.

5. A composition according to claim 1, wherein component (a) is a compound of formula I, wherein L is benzene, thiophene, benzonitrile or acetonitrile which are unsubstituted or substituted by 1 to 3 C₁-C₄alkyl, nitrogen (N₂), unsubstituted or partially or completely fluorinated C₁-C₄alcohol, CO, H₂O or NH₃.

6. A composition according to claim 1, wherein component (a) is a compound of formula I, wherein Z₁⁻ and Z₂⁻ are each independently of the other H⁻, F⁻, Cl⁻, Br⁻, I⁻, or cyclopentadienyl which is unsubstituted or substituted by one or several hydroxide groups, amino groups, halogen atoms, C₁-C₂₀alkyl groups, C₁-C₂₀alkoxy groups, C₄-C₁₂cycloalkyl groups, C₄-C₁₂cycloalkoxy groups, C₆-C₁₆aryl group, C₆-C₁₆aryloxy groups or C₇-C₁₆aralkyl groups.

7. A composition according to claim 1, wherein component (b) is a compound of formula II, wherein R₄ is a C₁-C₂₀alkyl, C₁-C₂₀alkoxy, C₄-C₁₂cycloalkyl, C₄-C₁₂cycloalkoxy, C₆-C₁₆aryl, C₆-C₁₆aryloxy or C₇-C₁₆aralkyl group which is substituted by at least one hydroxyl group.

8. A composition according to claim 1, wherein component (b) is a compound of formula II, wherein R₄ is C₁-C₁₂hydroxyalkyl.

9. A composition according to claim 1, wherein component (b) is 2-methyl-3-butyn-2-ol or 2-phenyl-3-butyn-2-ol.

10. A composition according to claim 1, wherein the molar ratio of components (a) : (b) is from 25 : 1 to 1 : 10..

11. A composition according to claim 1, comprising 0.001-10.0 % by weight of component (a), 0.001-10.0 % by weight of component (b) and 85.0-99.99 % by weight of component (c), based on the entire composition.

12. A process for the preparation of a metathesis polymer, which comprises heating a composition as claimed in claim 1 to a temperature of >40 °C.

13. Use of a metathesis polymer according to claim 12 as casting resin, impregnating resin or as encapsulating material for electrical or electronic components.

## Revendications

1. Composition comprenant
(a) un composé de formule I
(R₁R₂R₃P)ₓL_{y}Me²⁺Z₁⁻Z₂⁻ (I),
où R₁, R₂ et R₃ représentent, indépendamment l'un de l'autre, un atome d'hydrogène, un groupe alkyle en C₁-C₂₀, un groupe alkoxy en C₁-C₂₀, un groupe cycloalkyle en C₄-C₁₂ ou cycloalkoxy non substitué ou substitué par des substituants alkyle en C₁₋C₆, haloalkyle en C₁₋C₆ ou alkoxy en C₁₋C₆, ou un groupe aryle en C₆₋C₁₆ ou aryloxy en C₆₋C₁₆ non substitué ou substitué par des substituants alkyle en C₁₋C₆, haloalkyle en C₁₋C₆ ou alkoxy en C₁₋C₆, ou un groupe aralkyle en C₇₋C₁₆ ou aralkyloxy en C₇₋C₁₆ non substitué ou substitué par des substituants alkyle en C₁₋C₆, haloalkyle en C₁₋C₆ ou alkoxy en C₁₋C₆ ; les restes R₂ et R₃ forment ensemble un groupe tétra- ou pentaméthylène, ou tétra- ou pentaméthylènedioxyle non substitué ou substitué par des substituants alkyle en C₁-C₆, haloalkyle en C₁-C₆ ou alkoxy en C₁-C₆, ou un groupe tétra- ou pentaméthylène, ou tétra- ou pentaméthylènedioxyle non substitué ou substitué par des substituants alkyle en C₁-C₆, haloalkyle en C₁₋C₆ ou alkoxy en C₁-C₆ et condensé sur un ou restes 1,2-phénylène, ou un groupes tétraméthylènedioxyle non substitué ou substitué par des substituants alkyle en C₁-C₆, haloalkyle en C₁-C₆ ou alkoxy en C₁-C₆ et condensé sur un restes 1,2-phénylène en positions 1,2 ou 3,4, et R₁ possède la signification donnée auparavant ;
L représente un ligand neutre, Me représente Ru ou Os, Z₁⁻ et Z₂⁻ sont chacun un anion chargé simplement ou Z₁⁻ et Z₂- sont ensemble un anion chargé doublement,
x est un nombre de 1 à 3 et y un nombre de 0 à 3, auquel cas on a 2≤ x+y ≤4 ;
et
(b) un composé de formule II
R₄-C≡C-H (II),
où R₄ représente un reste organique monovalent ayant jusqu'à 30 atomes de carbone, lequel présente au moins un groupe hydroxyle.
(c ) un dicyclopentadiène.

2. Composition selon la revendication 1, comprenant en tant que composant (a), un composé de formule I, dans laquelle Me représente le ruthénium.

3. Composition selon la revendication 1, comprenant, en tant que composant (a), un composé de formule I, dans laquelle R₁, R₂ et R₃ représentent indépendamment l'un de l'autre un alkyle en C₁-C₆, alcoxy en C₁-C₆, cycloalkyle en C₄-C₁₂, cycloalkoxy en C₄-C₁₂, aryle en C₆-C₁₆ ou aryloxy en C₆-C₁₆.

4. Composition selon la revendication 1, comprenant, en tant que composant (a), un composé de formule I, dans laquelle R₁, R₂ et R₃ représentent indépendamment l'un de l'autre des groupes isopropyle, sec.-butyle, phényle, tolyle, cyclopentyle ou cyclohexyle.

5. Composition selon la revendication 1, comprenant, en tant que composant (a), un composé de formule I, dans laquelle L représente le benzène non substitué ou substitué par 1 à 3 substituants alkyle en C₁-C₄, le thiophène, le benzonitrile, l'acétonitrile, l'azote (N₂), un alcool en C₁-C₄ non substitué ou fluoré en partie ou complètement, CO, H₂O ou NH₃.

6. Composition selon la revendication 1, comprenant, en tant que composant (a), un composé de formule I, dans laquelle Z₁⁻ et Z₂⁻ représentent indépendamment l'un de l'autre H⁻, F⁻, Cl⁻, Br⁻, I⁻ ou un groupe cyclopentadiényle non substitué ou substitué par un ou plusieurs groupes hydroxyles, groupes amino, atomes d'halogène, groupes alkyle en C₁-C₂₀, alcoxy en C₁-C₂₀, cycloalkyle en C₄-C₁₂, cycloalcoxy en C₄-C₁₂, aryle en C₆-C₁₆, aryloxy en C₆-C₁₆ ou aralkyle en C₇-C₁₆.

7. Composition selon la revendication 1, comprenant en tant que composant (b), un composé de formule II, dans laquelle R₄ représente un groupe alkyle en C₁-C₂₀, alkoxy en C₁-C₂₀, cycloalkyle en C₄-C₁₂, cycloalkoxy en C₄-C₁₂, aryle en C₆-C₁₆, aryloxy en C₆-C₁₆ ou aralkyle en C₇-C₁₆ substitué par au moins un groupe hydroxyle.

8. Composition selon la revendication 1, comprenant en tant que composant (b), un composé de formule II, dans laquelle R₄ représente un groupe hydroxyalkyle en C₁-C₁₂.

9. Composition selon la revendication 1, comprenant en tant que composant (b) le 2-méthyl-3-butyn-2-ol ou le 2-phényl-3-butyn-2-ol.

10. Composition selon la revendication 1, dans laquelle le rapport molaire des composants (a):(b) est de 25:1 à 1:10.

11. Composition selon la revendication 1, comprenant, par rapport à la totalité de la composition, de 0,001 à 10,0 % en poids de composant (a), de 0,001 à 10,0 % en poids de composant (b) et de 85,0 à 99,99 % en poids du composant (c).

12. Procédé pour préparer un polymère par métathèse, **caractérisé en ce qu'**on chauffe une composition selon la revendication 1 à une température >40°C.

13. Utilisation d'un polymère par métathèse selon la revendication 12, en tant que résine à couler, résine d'imprégnation ou en tant que matériau de gainage pour des composants électriques ou électroniques.
